# EUROPEAN PATENT APPLICATION

(11) **EP 2 711 851 A2**
(43) Date of publication of application: **26.03.2014**
(21) Application number: 13181204.2
(22) Date of filing: 21.08.2013
(51) Int. Cl.: G06F 17/30, G11B 27/10, H04N 21/478, H04N 21/8541

(54) **Display apparatus and control method thereof**

(30) Priority: 25.09.2012 KR 20120106410
(71) Applicant: Samsung Electronics Co., Ltd, Gyeonggi-do 443-742 (KR)
(72) Inventor: Lee, Hwa-soo, Gyeonggi-do (KR); Jeong, Go-woon, Seoul (KR); Kim, Min-jee, Gyunggi-do (KR); Han, Hye-ri, Seoul (KR); Noh, Young-ry, Gyeonggi-do (KR); Park, Yeong-chun, Seoul (KR); Im, Hye-min, Gyeonggi-do (KR); Ji, You-seon, Gyeonggi-do (KR)
(74) Representative: Instone, Terry

(57) **Abstract**

Disclosed are a display apparatus and a control method thereof. The display apparatus includes: an image processor which processes an image of a content including a plurality of scenes in order to display the image; a display which displays an image of the content thereon; a voice input which inputs a user's voice; and a controller which displays a first scene of the plurality of scenes of the content, and displays a second scene falling under a next scene of the first scene, out of the plurality of scenes of the content, in response to a determination that the user's voice, which has been input while the first scene is displayed, corresponds to the first scene.

## Description

### BACKGROUND

### Field

Apparatuses and methods consistent with the exemplary embodiments relate to a display apparatus and a control method thereof. More particularly, the exemplary embodiments relate to a display apparatus and a control method thereof which provides a content including a series of scenes.

### Description of the Related Art

A display apparatus such as a TV, a smart pad or a personal computer (PC), etc., may play and provide a content including an image. Such content may vary, e.g., including a content such as a fairy tale which consists of a series of scenes.

In response to content such as a fairy tale being played, when a user intends to move from a scene to a next scene, he/she presses a button on a remote controller or manipulates a panel of a display apparatus or touches a screen in a known manner.

Beyond such a simple type of interface, an interface is needed which is more intuitive and catches a user's attention and enables a user to focus on the content.

### SUMMARY

According to the present invention there is provided an apparatus and method as set forth in the appended claims. Other features of the invention will be apparent from the dependent claims, and the description which follows.

Accordingly, one or more exemplary embodiments provide a display apparatus and a control method thereof which is more intuitive, catches a user's attention and enables a user to focus on content while playing a content including a series of scenes.

The foregoing and/or other aspects may be achieved by providing a display apparatus including: an image processor which processes an image of a content including a plurality of scenes in order to display an image; a display which displays an image of the content; a voice input which is inputs a user's voice; and a controller which displays a first scene of the plurality of scenes of the content, and displays a second scene falling under a next scene of the first scene out of the plurality of scenes of the content in response to a determination that the user's voice, which has been input while the first scene is displayed, corresponds to the first scene.

The display apparatus may further include a storage which stores therein information regarding lines which corresponds to each of the plurality of scenes, wherein the controller determines that the user's voice corresponds to the first scene in response to a degree of consistency between the user's voice and the lines of the second scene being at or above a predetermined value.

In response to the degree of consistency between the user's voice and the lines of the second scene being less than the predetermined value, the controller may guide a user to the lines of the second scene.

The display apparatus may further include a user input, wherein the controller determines a basis for the degree of consistency between the user's voice and the lines of the second scene, according to the user's input.

The controller may guide a user so that the user knows when it is the user's turn to speak the lines of the second scene, while the first scene is displayed.

The display apparatus may further include a camera which photographs a user's image, wherein the controller reflects the photographed user's image on at least one of the plurality of scenes, of the content.

The foregoing and/or other aspects may also be achieved by providing a method of controlling a display apparatus including: displaying a first scene of a plurality of scenes of a content; inputting a user's voice while the first scene is being displayed; determining whether the input user's voice corresponds to the first scene; and displaying a second scene falling under a next scene of the first scene of the plurality of scenes of the content in response to the input user's voice corresponding to the first scene.

The determining whether the input user's voice corresponds to the first scene may include referring to information regarding lines which correspond to the plurality of scenes stored in the display apparatus in order to determine whether the degree of consistency between the user's voice and the lines of the second scene is at or above a predetermined value.

The control method may further include guiding a user through the lines of the second scene in response to the degree of consistency between the user's voice and the lines of the second scene being less than the predetermined value.

The control method may further include determining a basis for the degree of consistency between the user's voice and the lines of the second scene, according to the user's input.

The control method may further include guiding a user to inform the user when it is a user's turn to speak lines of the second scene, while the first scene is displayed.

The control method may further include photographing a user's image; and displaying at least one of scenes reflecting the photographed user's image out of the plurality of scenes of the content.

An exemplary embodiment may further provide a display apparatus including: an image processor which processes an image including a plurality of scenes; a voice input which inputs a user's voice; and a controller which transmits to a display a first scene of the plurality of scenes, and displays a second scene falling under a next scene of the first scene in response to a determination that the user's voice, which has been input while the first scene is displayed, corresponds to the first scene. A storage may be provided which stores information which corresponds to each of the plurality of scenes, wherein the controller determines that the user's voice corresponds to the first scene in response to a degree of consistency between the user's voice and in response to the lines of the second scene being at or above a predetermined value. In addition, while the first scene is displayed, the controller may let the user know when is the user's turn to speak the lines of the second scene.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram of a display apparatus according to an exemplary embodiment;
FIG. 2 is a flowchart showing a method of controlling the display apparatus according to an exemplary embodiment;
FIG. 3 illustrates correlation between each scene and line of a content according to an exemplary embodiment;
FIG. 4 is a flowchart showing another example of the method of controlling the display apparatus according to the exemplary embodiment;
FIG. 5 illustrates a character selecting screen according to the embodiment;
FIG. 6 illustrates a character making screen according to an exemplary embodiment;
   and
FIG. 7 illustrates a content playing screen according to an exemplary embodiment.

### DETAILED DESCRIPTION OF EXEMPLARY EMBODIMENTS

Below, exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

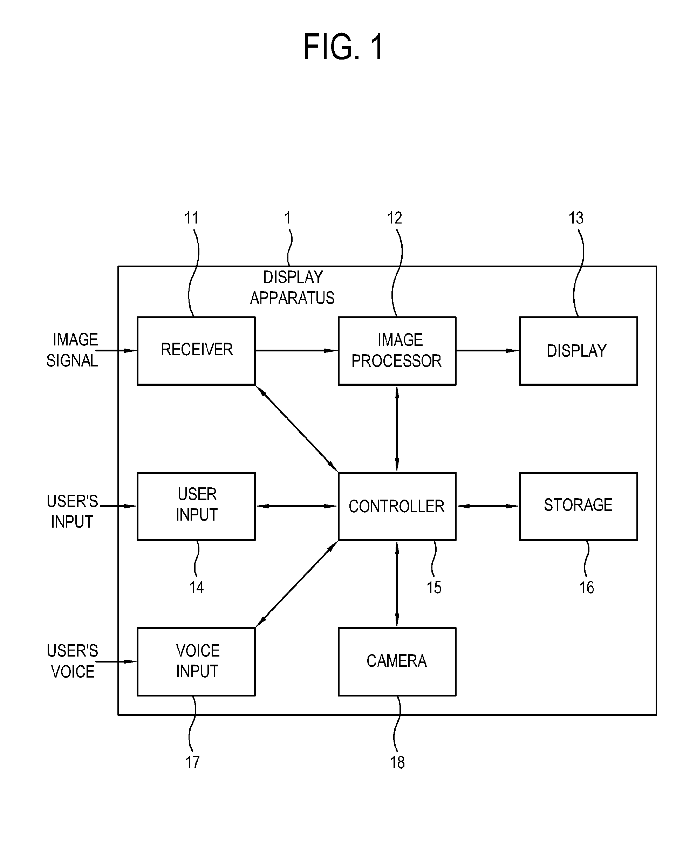

Hereinafter, an exemplary embodiment will be described in detail. FIG. 1 is a block diagram of a display apparatus according to an exemplary embodiment. The display apparatus 1 may include a receiver 11, an image processor 12, a display 13, a user input 14, a controller 15, a storage 16, a voice input 17 and a camera 18. The display apparatus 1 may be implemented as a TV, a smart pad or a PC, and may apply to any device as long as it plays a content, notwithstanding its name. The configuration of the display apparatus 1 shown in FIG. 1 is just an exemplary embodiment, and may vary. For example, the display apparatus 1 shown in FIG. 1 may be implemented, without camera 18.

The receiver 11 receives an image signal which includes a content. The receiver 11 may receive a broadcasting signal as an image signal from a transmission apparatus (not shown) of a broadcasting signal such as a TV broadcasting signal, an image signal from an image device such as a DVD player or a BD player, an image signal from a PC, an image signal from a mobile device such as a smart phone or a smart pad, an image signal from a network such as the Internet, or may receive an image content as an image signal stored in a storage medium such as a universal serial bus (USB) storage medium. According to another exemplary embodiment, the content may be stored in the storage 16 to be provided rather than being received by the receiver 11.

The content according to an exemplary embodiment is a content consisting of a series of scenes. For example, the content may include a fairy tale which is provided in the form of an image. The content is played by scene, and upon a user's command each scene is played, and the scene changes to a next scene according to the user's command.

The image processor 12 processes an image signal received by the receiver 11 in order to display an image. The display 13 may display an image thereon based on the image signal processed by the image processor 12. The display type of the display 13 includes, but not limited to, a liquid crystal display (LCD), a plasma display panel (PDP), an organic light emitting diode (OLED), etc. In this case, the display 13 may include an LCD, a PDP or an OLED panel.

The user input 14 receives a user's input. The user input 14 may include a remote control signal receiver which receives a remote control signal including a user's input from a remote controller and a manipulation button or a touch panel to directly receive a user's input.

The storage 16 includes a non-volatile memory such as a flash memory, a hard disc drive, etc. The storage 16 stores therein programs and data necessary for operations of the display apparatus 1. Such programs include an operating system (OS), an application program, etc. The storage 16 may further store therein information regarding lines which correspond to each scene of the content. The lines according to an exemplary embodiment may be, for example, lines which are spoken by a character in a fairy tale.

The controller 15 controls playing of the content. That is, in response a user's voice being input while a scene (hereinafter, to be referred to as "first scene") of the content being played, the controller 15 determines whether the input user's voice corresponds to the current first scene, and if so, displays a next scene (hereinafter, to be referred to as a "second scene"). A detailed operation of the controller 15 will be described later.

The voice input 17 receives a user's voice. For example, the voice input 17 may be implemented as a microphone. The camera 18 photographs a user's image.

The controller 15 may include a non-volatile memory (not shown) storing therein a control program which performs the control operation, a volatile memory (not shown) loading at least a part of the stored control program and a microprocessor (not shown) which executes the loaded control program. The storage 16 may include a non-volatile memory which stores the control program.

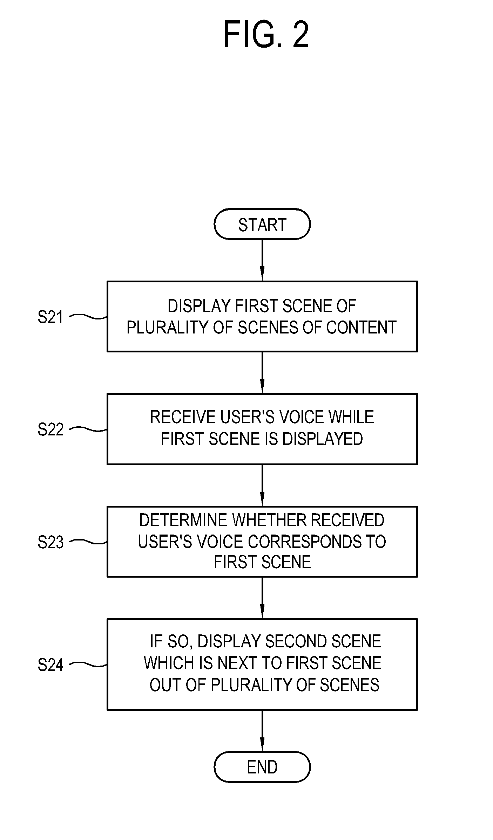

FIG. 2 is a flowchart which shows a method of controlling the display apparatus 1 shown in FIG. 1. At operation S21, the controller 15 of the display apparatus 1 displays the first scene of a series of scenes of content. It is assumed that the content according to this exemplary embodiment is a storybook. At operation S22, the controller 15 identifies whether a user's voice has been input through the voice input 17 while the first scene is being displayed. At operation S23, the controller 15 determines whether the input user's voice corresponds to the first scene of the content being currently displayed. At operation S24, in response to a determination that the input user's voice corresponds to the first scene of the content which is currently displayed, the controller 15 displays the second scene as the next scene. By the same method, the display apparatus 1 proceeds with a scenario of the content by interactively exchanging lines with a user.

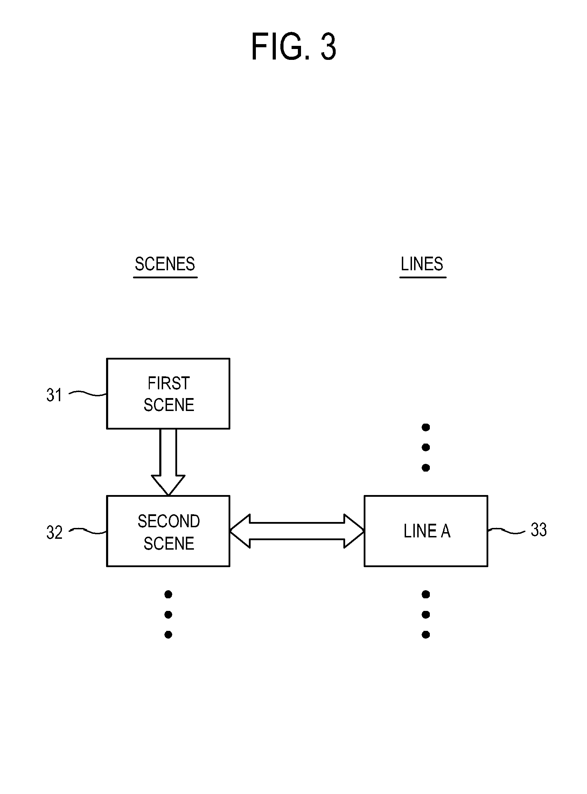

Referring to FIG. 3, in response to a user's voice being input while the first scene 31 is being displayed, the controller 15 refers to information regarding lines stored in the storage 16. The storage 16 stores therein information regarding lines which correspond to each scene of the content. The controller 15 refers to a line a 33 which corresponds to the second scene 32 as a next scene often the first scene 31 which is currently being displayed, out of the information of lines of the storage 16. The controller 15 determines whether the input user's voice corresponds to the line a 33, and displays the second scene according to the result of the determination.

According to an additional exemplary embodiment, when the first scene is being displayed, the controller 15 identifies whether it is a user's turn to speak lines, and if so (yes in the example in FIG. 3), may inform a user that it is a user's turn to speak lines. For example, the controller 15 may display a guiding message or guiding icon together with the first scene or may output a guiding voice to inform a user that it is a user's turn to speak lines. The display apparatus 1 may further include a voice output (not shown) including a speaker to output the guiding voice.

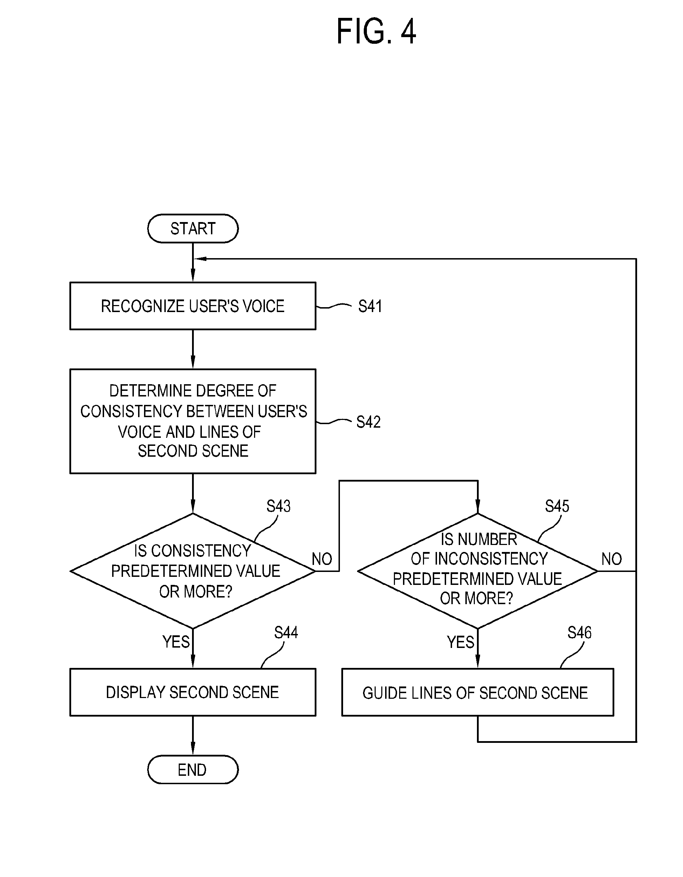

FIG. 4 is a flowchart which shows another example of the method of controlling the display apparatus 1. This exemplary embodiment may fall under a more detailed process than the operation S23 in FIG. 2. At operation S41, the controller 15 recognizes an input user's voice. The controller 15 may analyze a sentence structure, vocabulary, meaning, etc. to recognize a user's voice. The controller 15 may recognize the sentence structure and vocabulary and analyze the meaning by context through a predetermined software algorithm, with respect to the input user's voice.

At operation S42, the controller 15 determines a degree of consistency between the content of the recognized user's voice and the lines of the second scene. The controller 15 may identify the consistency between the lines and pattern, order of lines and subject of lines to determine the degree of consistency between the content of the user's voice and the lines of the second scene. At operation S43, the controller 15 identifies whether the degree of consistency between the content of the user's voice and the lines of the second scene is a predetermined value or more. In response to a determination at operation S43 that the degree of consistency is a predetermined value or more, the controller 15 displays the second scene at operation S44.

According to an additional exemplary embodiment, the controller 15 may determine a basis for the degree of consistency between the content of the user's voice and the lines of the second scene. For example, the degree of consistency of lines may include various modes such as novice (low consistency), intermediate (middle consistency) and advanced (high consistency). Each mode may be selected by a user's input. The mode of the degree of consistency of lines may be selected through a user interface (not shown).

In response to a determination at operation S43 that the degree of consistency is not at or above predetermined value, the controller 15 may identify whether the number of inconsistency is a predetermined value or more, and in response to the number of inconsistency being less than the predetermined value, the controller 15 may give a user one more chance to speak lines, and may perform the operation S41 again. In this case, the controller 15 may display a guiding message to enable a user to speak lines again.

In response to a determination at operation S45 that the number of inconsistency is a predetermined value (e.g. three times) or more, the controller 15 may provide the lines so that a user may easily speak the lines. For example, the controller 15 may display on the display 13 the lines of the second scene or speak out the lines of the second scene so that a user may repeat after the controller 15. The display apparatus 1 may further include a voice output (not shown) including a speaker to output the voice reading the lines.

According to another exemplary embodiment, in response to the lines not consistent (or not consistent for predetermined times or more), the controller 15 may skip to the next second scene.

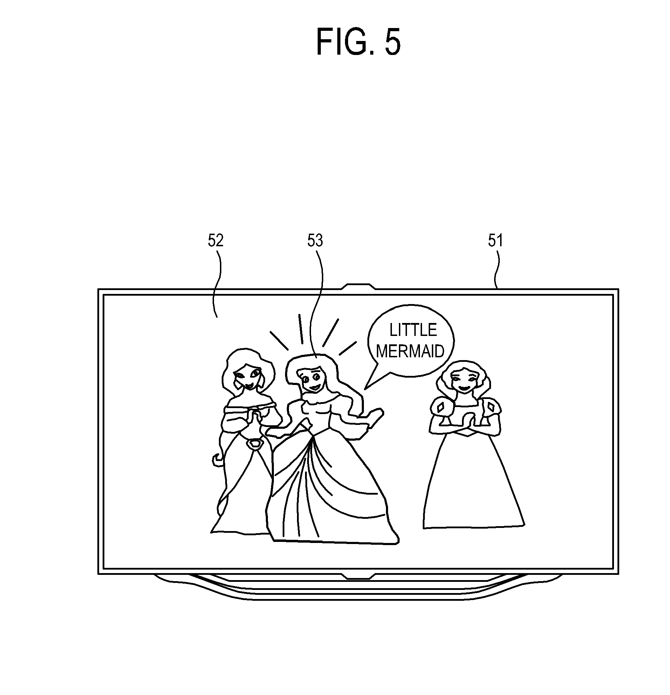

FIG. 5 illustrates a character selecting screen according to an exemplary embodiment.
   When the content playing operation starts, the controller 15 may display a character selecting screen 52 on the display 51. A user may select a character 53 for which he/she speaks lines in the content by using the user input 14. The controller 15 performs the aforementioned operation in the scene in which the selected character 53 speaks lines out of scenes of the content.

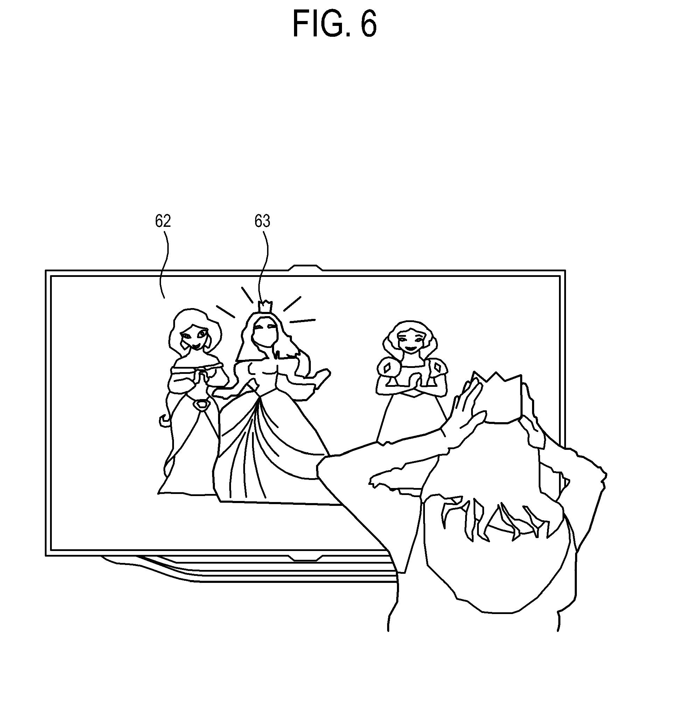

FIG. 6 illustrates a character making screen according to an exemplary embodiment.
   According to an additional exemplary embodiment, the controller 15 may further display a character making screen 62 when selecting the character. In this case, the controller 15 photographs a user's image through the camera 18. In this exemplary embodiment, an assumption that a user wears accessory such as a crown. The controller 15 identifies the shape of the crown from the photographed user's image, and reflects the identified shape on the character (e.g., synthesis of the image) (refer to reference numeral 63). Then, the controller 15 may reflect the shape of the crown on the character in a scene in which a user's character shows when the content is played. Then, a user may be more interested in the content.

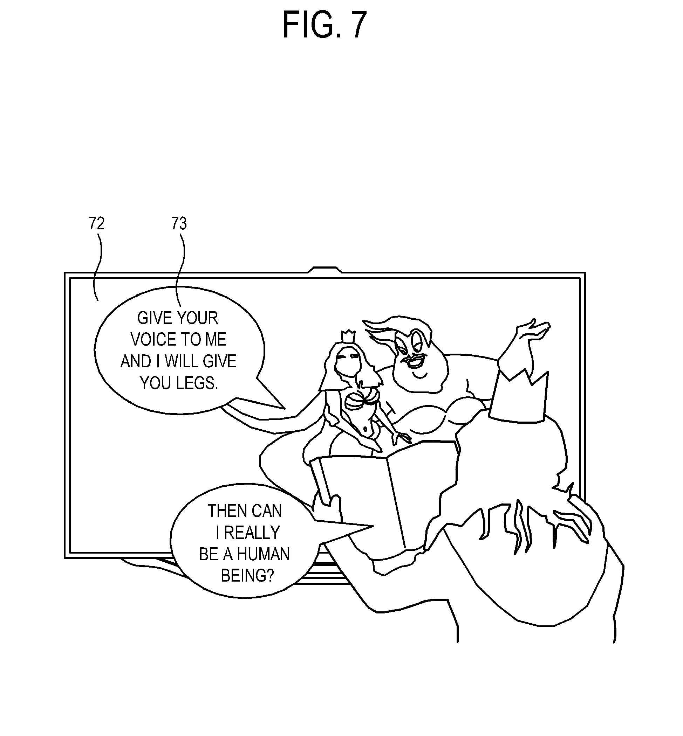

FIG. 7 illustrates an example of a content playing screen according to an exemplary embodiment. As shown therein, the controller 15 displays a first scene 72 of a content, and outputs lines 73 of a counterpart of a user's character. A user speaks his/her lines when it is his/her character's turn to speak lines. The controller 15 identifies a user's voice and proceeds with a next scene depending on the consistency of the lines.

As described above, a display apparatus and a control method thereof enables a user to proceed with scenes of a content through a user's voice without any additional manipulation device, and enables a user to more intuitively and conveniently enjoy the content.

Also, the display apparatus and the control method thereof enables a user to speak lines by himself/herself and focus on the content, as well as be more interested in the content.

Further, the display apparatus and the control method thereof may help children to improve their story-telling and speaking capabilities.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
an image processor which processes an image of a content comprising a plurality of scenes in order to display the image;
a display unit which displays an image of the content thereon;
a voice input unit which inputs a user's voice; and
a controller which displays a first scene of the plurality of scenes of the content, and displays a second scene falling under a next scene of the first scene out of the plurality of scenes of the content upon a determination that the user's voice, which has been input while the first scene is displayed, corresponds to the first scene.

2. The display apparatus according to claim 1, further comprising a storage unit which stores therein information regarding lines corresponding to each of the plurality of scenes, wherein the controller determines that the user's voice corresponds to the first scene if a degree of consistency between the user's voice and the lines of the second scene is a predetermined value or more.

3. The display apparatus according to claim 2, wherein if the degree of consistency between the user's voice and the lines of the second scene is less than the predetermined value, the controller guides a user to the lines of the second scene.

4. The display apparatus according to claim 2, further comprising a user input unit which receives a user's input, wherein the controller determines a basis for the degree of consistency between the user's voice and the lines of the second scene according to the user's input.

5. The display apparatus according to one of claims 1 to 4, wherein the controller guides a user when it is the user's turn to speak the lines of the second scene, while the first scene is displayed.

6. The display apparatus according to one of claims 1 to 5, further comprising a camera which photographs a user's image, wherein the controller reflects the photographed user's image on at least one of the plurality of scenes of the content.

7. A control method of a display apparatus comprising:
displaying a first scene of a plurality of scenes of a content;
inputting a user's voice while the first scene is being displayed;
determining whether the input user's voice corresponds to the first scene; and
displaying a second scene falling under a next scene of the first scene of the plurality of scenes of the content if the input user's voice corresponds to the first scene.

8. The control method according to claim 7, wherein the determining whether the input user's voice corresponds to the first scene comprises referring to information regarding lines corresponding to the plurality of scenes stored in the display apparatus to determine whether the degree of consistency between the user's voice and the lines of the second scene is a predetermined value or more.

9. The control method according to claim 8, further comprising guiding a user to the lines of the second scene if the degree of consistency between the user's voice and the lines of the second scene is less than the predetermined value.

10. The control method according to claim 8, further comprising determining a basis for the degree of consistency between the user's voice and the lines of the second scene according to the user's input.

11. The control method according to one of claims 7 to 10, further comprising guiding a user when it is a user's turn to speak lines of the second scene while the first scene is being displayed.

12. The control method according to one of claims 7 to 11, further comprising photographing a user's image; and
displaying at least one of scenes reflecting the photographed user's image out of the plurality of scenes of the content.
